# EUROPEAN PATENT APPLICATION

(11) **EP 0 834 807 A1**
(43) Date of publication of application: **08.04.1998**
(21) Application number: 97114553.7
(22) Date of filing: 22.08.1997
(51) Int. Cl.: G06F 9/46

(54) **Method and apparatus for performing efficient corba transactions**

(30) Priority: 26.08.1996 US 697605
(71) Applicant: TANDEM COMPUTERS INCORPORATED, Cupertino, California 95014-0709 (US)
(72) Inventor: Lyon, James M., Redmond, Washington 98503 (US)
(74) Representative: Kahler, Kurt, Dipl.-Ing.

(57) **Abstract**

A method and apparatus for performing CORBA transactions utilizing workstation computers involves a client computer (10), and one or more server computers (20, 30, 40) implementing CORBA's OTS. The client computer (10) creates a new transaction and requests that an object be invoked. The client provides a combination Coordinator/Recovery Coordinator object to the server computer (20, 30, 40). The server computer (20, 30, 40) creates its own Coordinator/Resource/Recovery Coordinator object to handle the transaction. Within the object invocation, a resource is created and registered with the client's Coordinator object. The method returns and replies to the client, providing the server's Coordinator object. The Coordinator object is thus implicitly registered with the client computer (10). If this transaction involves invocation on other objects, the client will provide the first server's Coordinator object rather than its own to the subsequent servers (20, 30, 40).

## Description

### BACKGROUND OF THE INVENTION

### 1. Field of the Invention

The present invention relates to a method and apparatus for efficiently managing transactions utilizing the Object Transaction Service ("OTS") of the Common Object Request Broker Architecture ("CORBA") on workstation computers. More particularly, the method and apparatus of the present invention passes the responsibility of coordinating transactions from the workstation to the first server called by a transaction originator residing on the workstation. All subsequent servers involved in the transaction may then utilize the coordinator provided by the coordinating server.

### 2. Background

Distributed object computing combines the concepts of distributed computing and object-oriented computing. Distributed computing consists of two or more pieces of software sharing information with each other. These two pieces of software could be running on the same computer or on different computers connected to a common network. Most distributed computing is based on a client/server mode. With the client/server model, two major types of software are utilized: client software, which requests the information or service, and server software, which provides or implements the information or service.

Object-oriented computing is based upon the object model where pieces of code called "objects"--often abstracted from real objects in the real world--own data (called "attributes" in object-oriented programming parlance) and provide services through methods (also known as "operations" or "member functions"). The data owned by an object may be "public" or "private." Public data may be altered by any other object. Most data, however, is private and accessible only to methods owned by the object. Typically, the methods operate on the private data that the object owns. A collection of like objects make up an interface (or "class" in C+ + parlance). Each object is identified within a distributed object system by a unique identifier called an object reference.

In a distributed object system, a client sends a request (or "object call") containing an indication of the operation for the server to perform, the object reference, and a mechanism to return "exception information" about the success or failure of a request. The server receives the request and, if possible, carries out the request and returns exception information. An object request broker ("ORB") provides a communication hub for all objects in the system passing the request to the server and returning the reply to the client.

On the client side, the ORB handles requests for the invocation of a method and the related selection of servers and methods. When an application sends a request to the ORB for a method to be performed on an object, the ORB validates the arguments contained in the request against the interface and dispatches the request to the server, starting it if necessary. On the server side, the ORB receives such requests, unmarshals the arguments, sets up the context state as needed, invokes the method dispatcher, marshals the output arguments, and returns the results to the client, thereby completing the object invocation.

Both client and server must have information about the available objects and methods that can be performed. Through the hiding of private data ("encapsulation" in object-oriented parlance), the client does not need to know how the request will be carried out by the server. Nevertheless, both client and server must have access to common interface definitions to enable communication therebetween. Currently, the standard language for distributed object computing is the Object Management Group 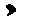 s ("OMG") Interface Definition Language ("IDL").

IDL is designed to be used in distributed object systems implementing OMG 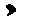 s Common Object Request Broker Architecture ("CORBA"). In a typical CORBA system, interface definitions are written in an IDL-defined source file (also known as a "translation unit"). The source file is compiled by an IDL compiler that generates programming-language-specific files, including client stub files, header files, and server skeleton files. Client stub files are then compiled and linked into client applications and are used to make requests. Header files are linked into client and server applications and are used to define data types. Server skeleton files are linked into server applications and are used to map client operations on objects (requests) to methods in a server implementation.

A CORBA ORB by itself does not include all that is necessary tor objects to interoperate at the system level. However, the ORB provides the basic mechanism for brokering object requests between a client and at least one server. Other necessary or desirable services may be provided by objects with IDL interfaces that reside on top of the ORB. IDL and the ORB provide the function of a "software bus"; the CORBA object services plug into this bus and augment it. The end-user object components make use of both the bus and its services.

Among the object services offered by a CORBA-compliant distributed object system is the Object Transaction Service ("OTS"). OTS is an attempt by OMG to marry distributed object technology with transaction processing technology. Transaction processing is a design philosophy that guarantees robustness in distributed systems. In an ORB environment, a transaction must be managed from its point of origin on the client, across one or more servers, and then back to the originating client. When a transaction ends, all parties involved (e.g., the client and all servers involved in the transaction) should agree as to whether the transaction succeeded or failed. Each party to the transaction either commits to the transaction or rolls the transaction back, thus forcing the transaction to start over. The transaction becomes the fundamental unit of recovery, consistency, and concurrency in a distributed object system. The OTS is implemented by transaction management software residing on each of the CORBA computers. This code is hereinafter referred to as the "transaction manager" (or "TM"). Each computer should preferably include a transaction manager that complies with the CORBA OTS standards to manage transactions for that particular machine.

One fundamental aspect of transaction processing is the so-called "two-phase commit" procedure. The two-phase commit procedure is a transaction processing protocol that is used to synchronize updates on different machines so that they either all fail or all succeed. This is done by centralizing the decision to commit but giving each subordinate party the right of veto. (The decision to commit is usually centralized with the client.) In the first phase of a commit, the commit manager sends a **prepare** command to all of the subordinate parties that were asked to participate in the transaction. The first phase of the commit terminates when the commit manager receives ready-to-commit signals from all of the participating subordinates. The second phase of the commit starts when the commit manager decides to commit the transaction. The second phase terminates when all of the subordinates have safely committed their part of the transaction. The two-phase commit aborts if any of the parties return an indication that they refuse to participate. In that case, the commit manager tells all of the subordinate parties to perform a rollback.

In OTS, a transaction is created in a client application (the "Transaction Originator") by invoking the method **begin** on a Current object. The Current object is actually a pseudo-object (an object that may be implemented by the ORB directly) representing a thread running in the client application. When a transaction is created, the transaction context of the client thread is implicitly associated with the new transaction. In addition, Terminator, Coordinator, and Recovery Coordinator objects come into existence. The Terminator object is used by the client to end the transaction by either committing or rolling back the transaction. The Coordinator object is used to coordinate a two-phase commit for the transaction. The Recovery Coordinator object is used to assist in recovering from a failed transaction. As an alternative to calling the **begin** method, a Control object can be created explicitly by calling the **create** method on the OTS 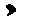 Factory object. The Control object is used to explicitly associate the current transaction with the thread. If the client invokes the **begin** method on the Current pseudo-object, the client application will not have any occasion to deal with these objects explicitly (perhaps with the exception of the Control object which can be used explicitly to handle multiple transactions).

OTS does not require that all requests on all objects have transactional behavior (such as the two-phase commit) even if that request is issued within the scope of a transaction. An object may support transactional behavior for some requests but not for others. Nontransactional objects are objects that have no operations that are affected by being invoked within the scope of a transaction. Transactional objects are objects whose behavior is affected by being invoked within the scope of a transaction. A transactional object typically contains or indirectly refers to persistent data that can be modified by requests. Transactional objects must inherit from OTS 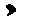 Transactional Object interface.

To implement transactional behavior in OTS, an object must participate in certain protocols, including the two-phase commit. An object is requested to participate in these protocols only if it directly manages data whose state is subject to change within a transaction. Such data is termed a "resource". An object whose data is affected by committing or rolling back a transaction is called a recoverable object. Recoverable objects, by definition, are transactional objects. An object can be transactional, however, but not recoverable by implementing its state using another recoverable object. A recoverable object in a server application indicates that it desires to participate in the two-phase commit protocol by creating a Resource object that represents the resource. This Resource object is then registered with the Coordinator object using the **register_resource** method.

With OTS, the ORB now has added responsibilities. Every thread of control in an application has an implicit current transaction (if no transaction is associated with the thread, the transaction is NULL). The ORB has no knowledge of the thread 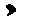 s implicit current transaction. Rather, when a Client application requests that a method be invoked on a Transactional Object, the ORB first calls an OTS routine that returns a data structure, the Transaction Context, describing the current transaction. The Transaction Context contains a Coordinator object reference, a Terminator object reference, a unique identifier, and other implementation-specific information. When the ORB transmits the request, the Transaction Context is automatically propagated along with the request. In the server 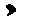 s thread, the ORB calls an OTS routine and passes the Transaction Context to that routine. The Server then creates its own Control object. After the method has returned, but before the reply has been sent to the client, the ORB calls another OTS routine which returns the Transaction Context. In the client, the ORB calls a fourth routine and passes the Transaction Context from the server. Thus, with every transactional method invocation, a Transaction Context is automatically propagated between the client thread and server thread.

This method of propagating the Transaction Context permits the server to merely memorize the Terminator and Coordinator object references for the transaction, associate them with its current thread of control, and later call the **get_coordinator** method of the Current thread to associate a resource with the memorized Coordinator object reference. If the server must invoke methods of other servers, however, the server must arrange to pass the Coordinator and Terminator object references onward. Thus, since the Terminator and Coordinator objects remain on (or close to) the client, all participating recoverable objects would be coordinated by the client. This could lead to numerous back-and-form communications, or "round-trips" between client and server. To avoid this problem, CORBA-compliant systems permit the interposition of a subordinate Coordinator object for completing the transaction. When the server receives a request from the client, the server creates its own transaction, registers the subordinate Coordinator object for that transaction with the client 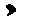 s Coordinator object, and makes that transaction become the current transaction. Upon creating its own transaction, the server receives its own Terminator and Resource objects (in addition to a subordinate Coordinator object) to describe the transaction. (Most likely the server will receive a combination Coordinator/Resource object that "inherits" attributes and methods from both the Coordinator and Resource interfaces.) The server registers its new Resource object with the client's Coordinator object. The client returns a Recovery Coordinator object to permit the new server Coordinator object to attempt a recovery from the transaction. All subsequent calls can then report to the server 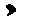 s new subordinate Coordinator object that, in turn, reports to the client 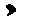 s Coordinator object. The interposition of the new subordinate Coordinator object eliminates a network round-trip for each communication with the subordinate Coordinator object, thereby increasing the speed of the various applications.

Despite the use of features such as interposition, OTS still requires many round trips to complete a transaction. For instance, in a single transaction involving interposition, the client requests a method to be performed on a particular object. If the object is a recoverable object, a Resource object is created on the server. The server transaction manager must first create its own subordinate Coordinator/Resource object and associate this object with the server transaction. The server Coordinator/Resource object must be registered with the client Coordinator, requiring a round-trip back to the client. Following the invocation of the method on the recoverable object, the method returns to the client. The client commits to the transaction and calls the **prepare** method on the server 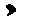 s resource, thus requiring another round-trip to the server and back to the client. The resource responds and the client calls the resource 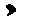 s **commit** method, requiring yet another round-trip to the server. If additional servers are involved, this process is even more time-consuming, thus reducing performance of the system.

In addition, the introduction of a Workstation into a CORBA OTS system can cause further problems. As seen from the discussion above, OTS involves significant administration of transactions, including the creation, managing, and preservation of two-phase commit logs on the various systems. If a workstation must act as the ultimate transaction manager, server applications may be left waiting for a workstation to respond (e.g., registering a resource). If the workstation fails to respond, the application may be left in a locked state until the workstation responds. If, for instance, the workstation has failed because a user has shut off the computer, the server application can be waiting for days or months.

Accordingly, a need exists for a method and system for performing and implementing transactional distributed object calls in a system implementing the CORBA OTS specification, or similar systems, that reduces the overall number of network round trips.

Further, a need exists for a method and system for performing distributed object calls in a system implementing the CORBA OTS specification, or similar systems, that efficiently manages transactions, particularly those involving workstation or similar computers.

### SUMMARY OF THE INVENTION

The present invention satisfies the need for a method and system for performing transactional distributed object calls in a system implementing the CORBA OTS specification that reduces the overall number of network round trips. Moreover, the present invention satisfies the need for a method and system that efficiently manages transactions that involve computers workstation computers.

The present invention is defined in claims 1, 9, 11 and 16, respectively

In particular, the method and system of the present invention manages a CORBA-compliant transaction involving a client computer, and one or more server computers. Both the client computer and server computer memories contain code for implementing a CORBA OTS-compliant transaction manager. The client computer requests the initiation of a transaction. The client transaction manager creates a Terminator object and a Coordinator/Recovery Coordinator object. The client then requests an invocation of a method on an object residing on the server computer. The request is transmitted by the ORB to the server computer. A Transaction Context structure is sent along with the request. The structure includes a flag that indicates that the client would like the first server computer to register its resources "implicitly" with the client Coordinator object when the server ultimately replies to the client. The server computer receives the request and, rather than actually registering local Resource objects directly with the client, creates its own Coordinator/Resource/Recovery Coordinator object to handle the transaction. This Coordinator/Resource/Recovery Coordinator object is not yet registered with the client computer, thus saving a round trip at this time relative to the previously-disclosed interposition method. The server computer then invokes the method on the object. Within the object invocation, a resource is protected by creating a Resource object and registering the resource with the server Coordinator/Resource/Recovery Coordinator object instead of actually registering directly with the client Coordinator object. The method continues and replies to the client. The Transaction Context structure is modified to indicate that the server wishes to implicitly register its Coordinator/Resource/Recovery Coordinator object with the client 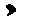 s Coordinator. The ORB transmits the reply back to the client.

If the client performs another invocation of a method on an object, the client will modify the Transaction Context passed to the new server. Rather than including its own Coordinator object reference in the Transaction Context, however, the client will pass the first server's Coordinator/Resource/Recovery Coordinator object reference provided by the first server computer in its reply to the client. All subsequent servers will then be required to register explicitly with this first server's Coordinator/Resource/Recovery Coordinator object rather than the client 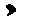 s Coordinator object.

The method of the present invention eliminates a network round trip by requiring the first server computer to register its resources implicitly with the client Coordinator object, as described above. The server computer does not register its Coordinator/Resource/Recovery Coordinator object explicitly with the client 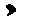 s Coordinator object. The client, in return, ensures that the server will receive a combination Coordinator and Recovery Coordinator object reference. The server must actively query this Coordinator/Recovery Coordinator object to ascertain information about the transaction.

Furthermore, the method of the present invention removes the administrative responsibility for coordinating the transaction from the client computer. Instead, the server computer implicitly registers with the client computer, as described above, by returning a Coordinator/Resource/Recovery Coordinator object reference to the client. The client computer provides this server computer Coordinator/Resource/Recovery Coordinator object reference to subsequent servers participating in the transaction. These new servers, therefore, can explicitly register with the first server computer in order to participate in the transaction.

A more complete understanding of the method for performing CORBA OTS transactions will be afforded to those skilled in the art, as well as a realization of additional advantages and objects thereof, by a consideration of the following detailed description of the preferred embodiment. Reference will be made to the appended sheets of drawings which will first be described briefly.

### BRIEF DESCRIPTION OF THE DRAWINGS

Fig. 1 is a block diagram of a representative system utilizing the method of the present invention.
Figure 2 is a block diagram of the various applications and objects involved in a typical CORBA system that implements the OTS
Figure 3 is a flow chart of the steps involved in a transaction using interposition on a CORBA system.
Figure 4 is a flow chart of the steps involved in a transaction utilizing the method of the present invention.

### DETAILED DESCRIPTION OF THE PREFERRED EMBODIMENT

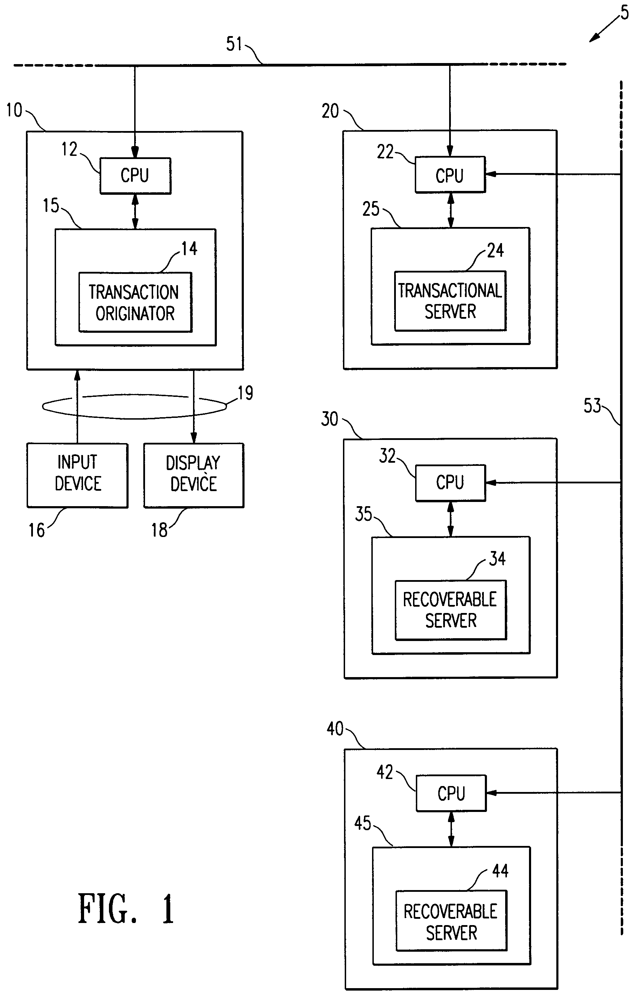

Figure 1 is a block diagram of a representative computer system 5 utilizing a preferred embodiment of the method of the present invention. A client workstation 10 includes a CPU 12. The workstation 10 includes input/output lines 19 connected to a display device 18 and an input device 16. Display device 18 is, for example, a display terminal and input device 16 is, for example, a keyboard or a mouse. It will be understood by persons of ordinary skill in the art that the computer system 5 can also include numerous elements not shown in Figure 1 for the sake of clarity, such as disk drives, additional keyboards, additional output lines, additional display devices, additional network connections, additional memory, additional CPUs, etc.

The workstation client 10 communicates with other computers over a network, such as a wide area network, a local area network, or the internet, via a network bus 51. The network bus 51 may utilize telephone communication lines, cable lines, and other lines that permit communication to occur between and among various computers.

The workstation client 10 uses the network bus 51 to communicate with server computers 20, 30, 40. Each server computer 20, 30, 40 includes a CPU 22, 32, 42, and a RAM 25, 35, 45. Each of the servers communicates with other servers via a network bus 53 which is the same or similar to the network bus 51 discussed above. The network bus 53 may be connected to the network bus 51.

It should be noted that the use of three servers is meant to be demonstrative only. Within the context of the present invention, the "client" is an application that requests services while the "server" is an application that implements the requested service. Indeed, both the client and server applications may reside on the same computer. In any event, however, a distributed object environment should be loaded in the RAM of both computers. The distributed object environment includes the object request broker and the object transaction service.

The client workstation memory 15 includes a computer program called a "transaction originator" 14. The transaction originator is a program that begins a transaction. The transaction originator may also be called the transactional client. Server computer 20 includes a transactional server 24 loaded in RAM 25. The transactional server 24 is a collection of one or more objects whose behavior is affected by the transaction begun by the transaction originator, but which have no recoverable states of their own. Instead, the transactional server 24 implements transactional changes using other recoverable objects. The transactional server 24 does not participate in the completion of the transaction, but it can force the transaction to be rolled back, for example, by refusing to complete a two-phase commit. Server computers 30, 40 include a recoverable server 34, 44 loaded in RAM 35, 45. A recoverable server is a collection of objects, at least one of which is recoverable. A recoverable server participates in the protocols of the Object Transaction Service ("OTS") by registering one or more Resource objects with an OTS Coordinator object. The OTS drives the two-phase commit protocol by issuing requests to the resources registered for a transaction. During performance of the inventive method described herein, the various communications between the client and server, as indicated by the ORB and OTS occur over the network bus 51.

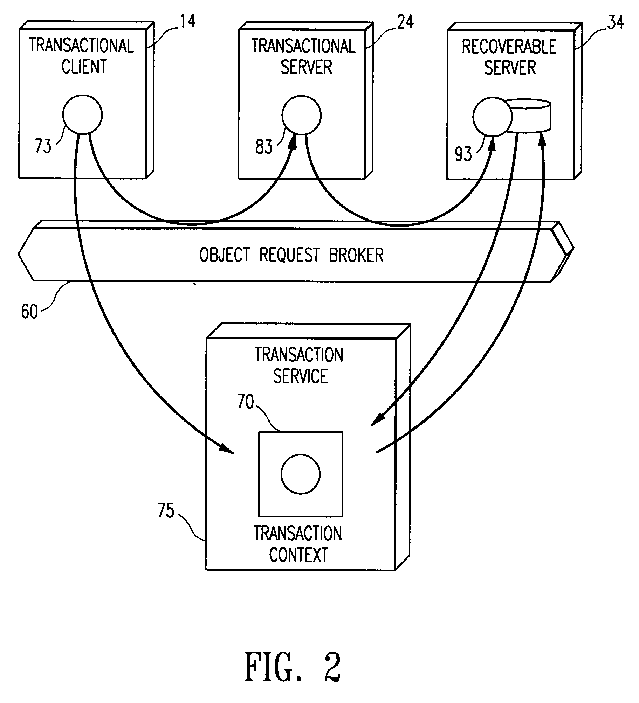

Figure 2 shows a block diagram of the various applications and objects involved in a system that implements the CORBA OTS specification, as modified by the present invention. The transaction originator 14 issues a set of method invocations on an object 73 that are bracketed by begin/end transaction demarcations. The calls within the bracket may be for both transactional and non-transactional objects. The object request broker ("ORB") 60 is middleware accessible by all computers in the system that intercepts the **begin** call 65 and directs it to the Transaction Service 75, which establishes a transaction context 70 associated with the client thread. The client then issues method invocations on transactional objects XXX contained in transactional servers XXX. The ORB implicitly tags the Transaction Context and propagates it in the call XXX to the object. Transactional servers are collections of one or more transactional objects whose behavior is affected by the transaction but have no recoverable states or resources of their own. The ORB 60 implicitly propagates the transaction context whenever these objects call a recoverable resource. A recoverable server XXX is a collection of recoverable objects whose data is affected by committing or rolling back a transaction.

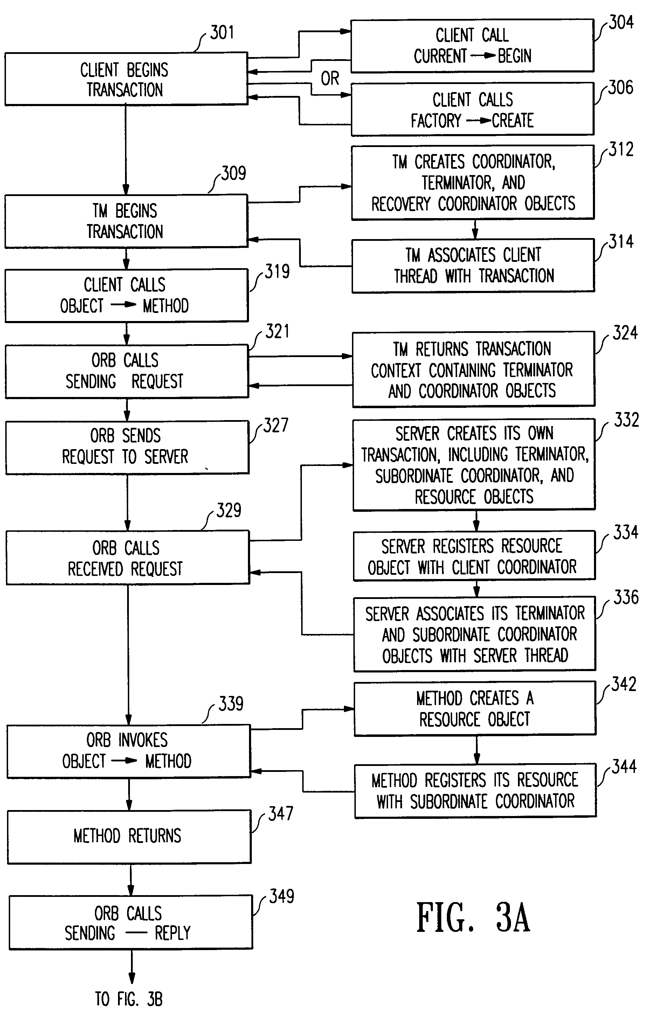

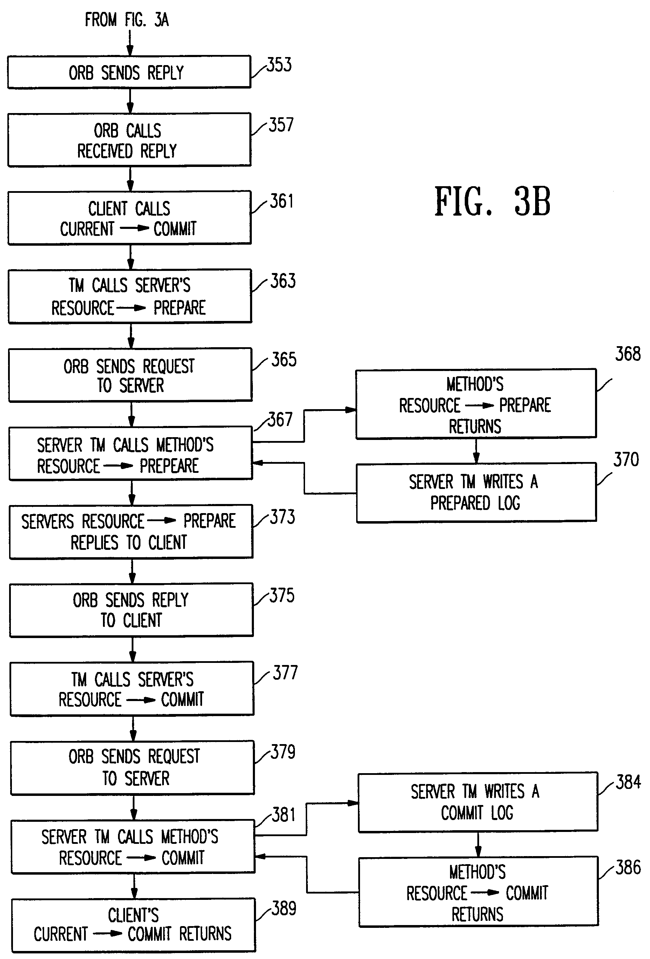

Figure 3 is a flow chart of the steps involved in a transaction using interposition on a CORBA system. In step 301, the client begins a transaction. This can be performed implicitly using the invocation of the **begin** operation on a Current pseudo-object in step 302. Alternatively, this can be performed explicitly by calling the OTS 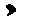 **create** method on a Factory object. The Current interface, as defined in the CORBA OTS specification, defines a CORBA pseudo-object that makes it easy for clients to use the OTS. The transaction manager code (the implementation of the **begin** method) starts a new transaction in step 305. In addition, the OTS creates Terminator, Coordinator, and Recovery Coordinator objects to describe the transaction in step 306. The Recovery Coordinator object is an object used by a recoverable object to drive the recovery process in certain situations. Each Recovery Coordinator object will be implicitly associated with a single Resource object. The TM associates the current client thread with the newly-created transaction in step 308. The client, in step 309, then requests that a method (here referred to as **method**) be invoked on a transactional object (of type "Object", e.g.).

The ORB, within the client 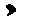 s thread, determines whether the object is a transactional object (i.e., whether Object inherits from Transactional Object). Seeing that Object is transactional, the ORB invokes the OTS function **sending_request** in step 311. This method is automatically invoked by the ORB when the ORB is preparing to send a method request to a different process. This method is used to build a Transaction Context that will be passed to the server process, record that a request is outstanding for the current transaction, and remember an association between the thread and the transaction. The **sending_request** method is sent to the OTS, which knows which transaction is the current transaction of the thread. The OTS, in step 312, returns the Transaction Context structure that contains object references for the Terminator object and Coordinator object for the transaction.

In step 313, the ORB sends the method request to the server process. Within the server process, in step 315, the ORB calls **received_request**, passing in the Transaction Context structure. This method is called automatically by the ORB when it receives a request with a Transaction Context from another process. The **received_request** method is used to create a new transactional object and to make that object the current transaction of the server thread. The OTS, in step 316, creates a new transaction and creates its own Terminator, subordinate Coordinator and Resource objects to describe the transaction. This step represents the interposition of a subordinate Coordinator object, discussed above. This step is performed to allow later-created local resources on the server to register with the new subordinate Coordinator, rather than returning to the client to register with the Client 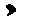 s Coordinator object. In step 318, the OTS also invokes the **register** method of the Coordinator interface on the client Coordinator object contained in the Transaction Context structure, passing an object reference to the newly created Resource object back to the client Coordinator object. The request to **register** the server Resource with the client Coordinator object constitutes a network round-trip back to the client machine. The **register** method registers the specified Resource object as a participant in the transaction associated with the target object. When the transaction is terminated, the Resource object will receive requests to commit or rollback the updates performed as part of the transaction. The registration operation previously returned a Recovery Coordinator object that can be used by the Resource object during recovery. A Recovery Coordinator object is used by the Resource object to determine what has occurred during a transaction.

When the **register** method returns, the OTS (within the **received_request** method) remembers the newly created Terminator and Coordinator objects and associates these objects and the transaction with the server thread.

Within the server process that executes the requested method on Object, the ORB invokes the requested method in step 319. That method calls the **get_coordinator** method of the Current object. Since the OTS has associated the current thread with the newly created transaction, this method call will return the object reference of the new subordinate Coordinator object. The method then creates a new object that inherits from the Resource object in step 320. This new Resource object is registered with the new subordinate Coordinator, in step 322, to indicate that the Resource would like to participate in the two-phase commit. It should be noted that since the subordinate Coordinator object is a local object that resides on the server, the invocation of the **register** method takes place relatively quickly. In step 323, the method completes and replies to the client.

On the server side, the ORB calls the **sending_reply** method of the OTS in step 325. This method is called automatically by the ORB when it is ready to send a reply to a transactional request. The method is used to return the appropriate Transaction Context object and to dissociate the new server transaction from the server 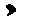 s thread. The OTS removes this association between the transaction and the thread and, effectively, sets the server 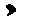 s current transaction state to NULL. The ORB transmits the reply back to the client in step 327. Within the client thread, the ORB invokes the **received_reply** method in step 329. This method is automatically invoked by the ORB when it has received a reply from a different process.

The client is then prepared to execute the two-phase commit. The two-phase commit is initiated by calling the **commit** method on the client 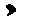 s Current object in step 331. This method is sent to the OTS. The OTS, which has associated the client thread with the transaction in step 308, determines which Resource objects have been registered with the Coordinator object in this transaction. In this example, only one Resource--the server 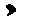 s OTS resource--has been registered with the client 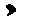 s Coordinator object (in step 318). Accordingly, the OTS sends the request to the server in step 333 and invokes the server Resource 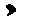 s **prepare** method in step 335. The ORB is used to invoke this request.

On the server side of this two-phase commit, the server 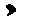 s OTS implements the server 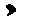 s **prepare** method by determining the number of Resource objects that have been registered with the server 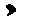 s subordinate Coordinator object. The server 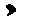 s OTS recognizes that one Resource object has been registered and invokes that Resource object 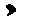 s **prepare** method. In step 337, the server 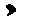 s Resource **prepare** method returns. The server OTS then writes a prepared record to its log and returns from its **prepare** method back to the client.

Having received the ready-to-commit response from the server 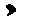 s OTS Resource object, the client 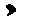 s OTS writes a commit record to its log at step 351 and invokes the **commit** method on the servers OTS 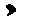 Resource object. In that object 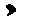 s **commit** method, a commit record is written to its log and the server OTS calls the server Resource object 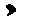 s **commit** method. Both the server method 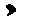 s Resource object and the server OTS 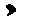 Resource object (i.e., the Coordinator/Resource object) return from their respective **commit** methods. Finally, the client 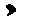 s **commit** method returns in step 341.

Utilizing the current CORBA OTS method, two problems arise. First, despite the use of interposition, numerous round-trip messages between client and server processes occur, as described above. If a single network round-trip could be eliminated, performance of the system would be enhanced. Second, if a user 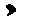 s workstation acts as the ultimate commit coordinator for a transaction, there will be many periods where the various server processes are waiting for the outcome of a process on the client. For example, the user might turn the workstation off in the middle of a transaction. Because the workstation may not be highly fault-tolerant and since a user 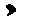 s workstation is ultimately responsible for ensuring the coordination of a transaction, such a system would be inherently unstable and unreliable.

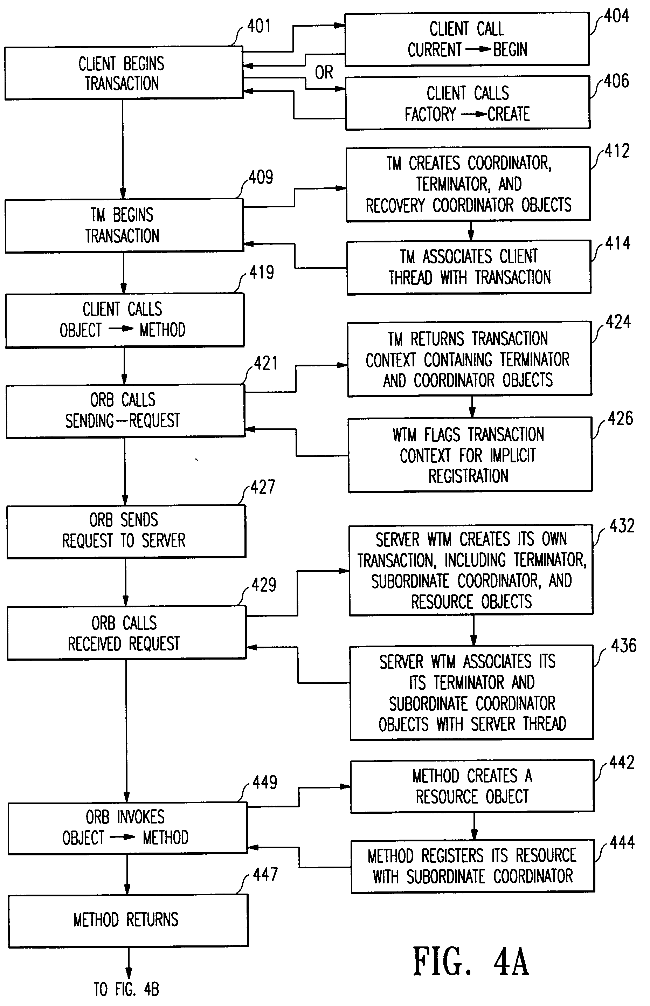

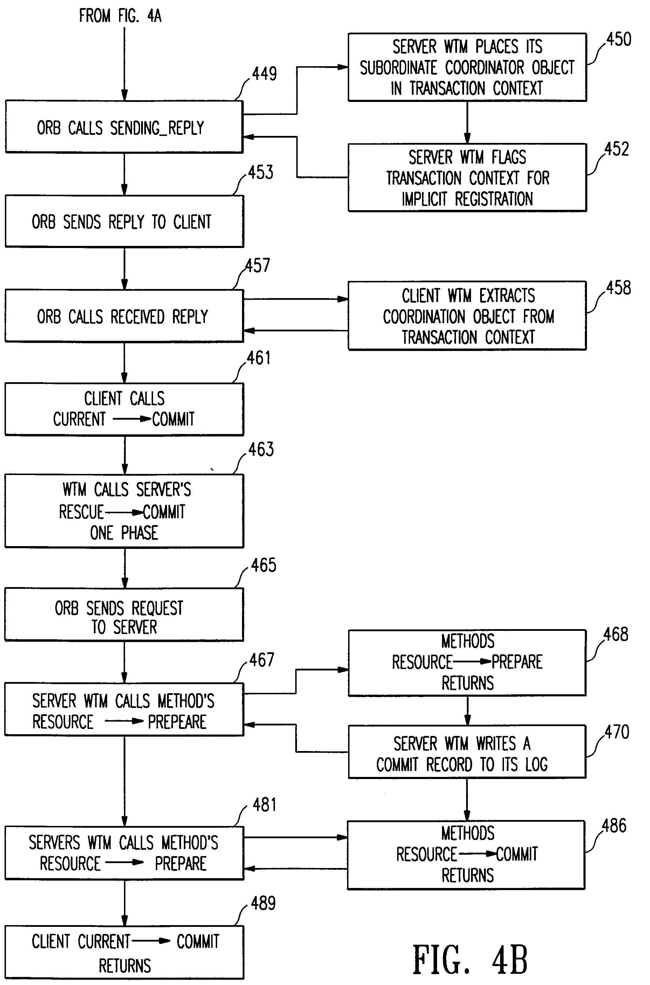

Now, with reference to Figure 4, a system and method of the present invention will be described. The method of the present invention describes the functioning of a Workstation Object Transaction Service a ("WOTS"). The implementation of the WOTS is contained entirely within the new transaction management code. The WOTS functions similarly to the CORBA OTS. Certain CORBA OTS classes are subclassed by the WOTS. Furthermore, certain methods within those classes are overridden. The new WOTS classes and their overridden methods will be described within the context of the method of the present invention. This method may operate on the system of the present invention, as set forth in Figures 1 and 2. For the sake of simplicity and clarity of explanation, only method steps will be referenced in the following description. However, the physical location of communications, storage and implementations of processes, as set forth in Figures 1 and 2, will be apparent to those of ordinary skill in the art.

This method, like that described above, assumes that a client process using WOTS is attempting to begin a transaction. Every process that uses the WOTS contains an object of class OTSWSProcess, which inherits from CORBA 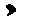 s standard OTSClientProcess class. This object is created with the call to OTSInit(), the CORBA OTS function that must be called before any attempt is made to use any OTS services. The OTSWSProcess object is never destroyed. The object serves as the Current pseudo-object, the Factory object, and the ORB-OTS interface objects. The single instance of this object is pointed to by the global OTS variables Transactions_Current, Transactions_Factory, and gpOTSClientProcess. Objects of the class OTSWSProcess include three overridden methods. The **GetFactory** method is overridden to create an instance of OTSWSFactory (described below) and to set the gpOTSFactory variable to point to this new instance. The **NewTransaction** method is overridden in OTSWSProcess to return a new OTSWSTransactionObject. Similarly, the **NewInheritedTransaction** method is overridden to create and return a new OTSWSInheritedTransaction object.

In step 401, the client begins a new transaction by explicitly creating a transaction via the **create** method on an object of type OTSWSFactory in step 404 or implicitly by calling the **begin** method on the Current object in step 402. The workstation transaction management code in the client (the "client WTM") begins a new transaction. If the call is made explicitly, the OTSWSFactory object is created. This object inherits from the CORBA OTSAbstractFactory object. This object utilizes three overridden methods, **create**, **import**, and **getrminf**o. The create operation creates a new WOTS transaction by returning a new OTSWSTransaction object. The **import** operation imports a new WOTS transaction. The **getrminfo** method returns information about a specific X/Open resource manager, given its symbolic name. If the transaction is begun implicitly, the OTSWSProcess object acts as the Current pseudo-object. Calling the **begin** method similarly creates an OTSWSTransaction object.

OTSWSTransaction interface inherits from CORBA OTS 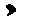 OTSClientTransaction interface. Like OTSClientTransaction, only one instance of the OTSWSTransaction object is explicitly or implicitly created for each transaction. This subclass overrides one known method, **newrequest**, and overrides one new method that should be implemented by the standard CORBA OTS implementation. The CORBA OTSClientTransaction **newrequest** method is overridden to record the fact that the transaction is involved in a new request and to return an appropriate Transaction Context structure. The overridden method modifies the implementation-specific data component of the Transaction Context structure in order to indicate that Implicit Registration will take place (Implicit Registration is discussed below.) Also, a new method, **RegisterImplicit**, is implemented in the base class and overridden. This method satisfies a request to engage in Implicit Registration that is received on a response from a remote method invocation.

The WOTS creates a new transaction in step 405. The creation of a new transaction implicitly creates a Terminator, Coordinator, and Recovery Coordinator objects in step 406. These objects are described above (as shown, the objects may be separate objects or, alternatively, the WOTS may create a single object that inherits from the Terminator, Coordinator, and Recovery Coordinator interfaces). The WTM associates the transaction with the client thread in step 410 and memorizes this association as described above with reference to the CORBA-compliant client TM.

In step 411, the client requests that a method, **method**, be performed on an object of class Object. Object is a recoverable object that includes data subject to change within the transaction. Object implements the logic of the transaction and also inherits its behavior from the OTS class TransactionalObject. Since Object is a transactional object (a recoverable object is, by definition, a transactional object), the ORB, in the client 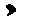 s thread calls the WOTS method, **sending_request** in step 413. This method is the same as the CORBA method discussed above. The WTM returns a Transaction Context structure containing different information, however. The Transaction Context structure returned by the WTM in step 414 contains the Coordinator object reference, the Terminator object reference, and additional information in "any" type component that can include implementation-specific data. In the method of the present invention, this component is preferably flagged by the client in step 416 to indicate that the client wishes to participate in Implicit Registration. Implicit Registration will be discussed below.

In step 417, the ORB transmits the request to perform **method** on Object to the server process. Within the server process, the ORB calls **received_request** in step 419 and passes in the Transaction Context received from the client. Inside of this method, the server WTM creates its own transaction, as discussed above. Accordingly, the server WTM creates a Terminator, a subordinate Coordinator, Recovery Coordinator, and Resource object in step 420. (The server WTM may also create a single object that inherits from each of these classes.) The server WTM examines the Transaction Context and sees that the client has indicated that it wishes to participate in Implicit Registration. The server WTM, therefore, does not invoke the **register** method. In step 422, the server WTM remembers the individual or combination Terminator, subordinate Coordinator, Recovery Coordinator, and Resource objects that it has created and associates these objects with the server 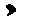 s current thread.

Implicit Registration is a promise by both client and server workstation transaction managers that ensures that one less network communication round trip will take place. The client transaction manager makes this promise by flagging the Implicit Registration flag in the implementation-specific component of the Transaction Context structure. The client WTM fulfills this promise by passing a reference to a Coordinator object that inherits from both the Coordinator and Recovery Coordinator class. As discussed above, the **register** method returns a Recovery Coordinator object to the Resource object. When the client indicates that it will participate in Implicit Registration, it promises that it will pass a Coordinator object that is also a Recovery Coordinator object. Thus, the server can be assured that it can ascertain information about the transaction from the Recovery Coordinator object. If the server WTM chooses to participate in Implicit Registration, the server must place its object reference (the combination Coordinator/Terminator/Recovery Coordinator/Resource object reference) in the Transaction Context before replying. This entire process of Implicit Registration eliminates the network round-trip required to register the Resource object created by the server WTM in step 318 of Figure 3.

Within the server process, the ORB calls **method** on Object in step 423. To implement the OTS protocols, the invocation of the recoverable object, Object, requires the creation of a Resource object to track Object 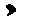 s involvement in the transaction. Accordingly, **method** would be implemented by calling the **get_coordinator** method on the Current object (representing the current thread). This call returns the newly-created subordinate Coordinator object. **Method** then creates a new Resource object in step 424 and calls the **register** method on the subordinate Coordinator object in step 426 to register this Resource object. The call to **Method** completes, in step 427, and returns.

Upon returning from the **method** function, the ORB, in step 429, calls the **sending_reply** method in the server WTM. The server WTM recognizes that a new Resource object has registered as part of this transaction. Accordingly, the server WTM needs to register the server transaction object (the combination Coordinator/Terminator/Recovery Coordinator/Resource object created in step 406). This registration is performed by placing the object reference to the Coordinator/Terminator/Recovery Coordinator/Resource object into the Coordinator component of the Transaction Context structure in step 430, which is automatically returned to the client along with the reply. The server WTM, in step 432, also flags the implementation-specific component of the Transaction Context structure to indicate that the server is willing to participate in implicit registration.

The ORB, in step 433, sends the reply back to the client. On the client side, the ORB invokes the **received_reply** method of the client WTM in step 435. Within the **received_reply** function, the client WTM examine the Transaction Context structure and sees that the server has accepted the offer of Implicit Registration. The client WTM, in step 436, extracts the object reference inserted by the server in step 430 and saves this object reference. If subsequent requests are made in this transaction, the client does not offer Implicit Registration as part of the Transaction Context. Instead, the object reference received from the first server will be passed as the Coordinator component of the Transaction Context structure. Thus, each subsequent server TM must register directly with the Coordinator of the first server involved in the transaction. The workstation client WTM is, thereby, relieved from acting as the ultimate commit coordinator for future requests in this transaction. This has the advantages that subsequent servers are not required to wait for the workstation client to reply from a request to register Resource objects. Rather, Resource objects on these subsequent servers are registered with the first server 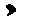 s Coordinator/Terminator/Recovery Coordinator/Resource objects. The fault-tolerance of the first server makes the implementation and monitoring of transactions more stable.

In step XXX, the client then invokes the **commit** method on the Current pseudoobject. The WTM, inside of the **commit** method, knows that a server has accepted the offer of Implicit Registration. The WTM, in step 439, then invokes that server 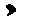 s **commit_one_phase** method of the Resource object that was implicitly registered. The ORB transmits this request to the server. Inside of the **commit_one_phase** method of the server WTM, the server WTM knows that a Resource object was registered with the Coordinator/Terminator/Recovery Coordinator/Resource object. Accordingly, the prepare method is called on the server 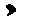 s Resource object in step 441. That object returns successfully from the **prepare** method. The server WTM writes a commit record to its log and then calls the server 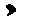 s Resource object 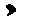 s **commit** method in step 443. The server 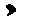 s **commit_one_phase** method returns successfully in step 445. The client 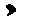 s **commit** method returns successfully in step 447. Although each of these methods is described as returning successfully, each object that has been registered in the transaction has the ability to rollback the transaction. If any participating object rolls back the transaction, the transaction fails. To attempt a recovery from the transaction, both the client and server can utilize their respective Recovery Coordinator objects. In addition, the server can utilize the Coordinator/Recovery Coordinator object reference that was obtained when the original request was sent to the client.

Having thus described a preferred embodiment of a method and system for performing CORBA OTS transactions, it should be apparent to those skilled in the art that certain advantages have been achieved. It should also be appreciated that various modifications, adaptations, and alternative embodiments thereof, including uses in transactions involving other than workstation computers, may be made within the scope and spirit of the present invention.

## Claims

1. A method for performing an object-oriented client transaction involving a client computer having a client application and a client transaction manager stored in a client computer memory, an object request broker, and a first server computer having a server application and a server transaction stored in a server computer memory, the method comprising the steps of:
beginning the client transaction in the client application;
requesting an invocation of a method on a recoverable object from the client application;
transporting the invocation request to the server computer memory;
beginning a server transaction in the server application;
invoking the method on the recoverable object in the server application;
notifying the server application that the recoverable object includes data subject to change within the server transaction;
creating a client notification that the server application includes data subject to change within the client transaction;
replying to the request from the client application; and
transporting the reply and the client notification to the client computer memory.

2. The method for performing an object-oriented client transaction as recited in Claim 1, further comprising the steps of:
preparing each participant in the server transaction for a committment to the server transaction;
committing each participant in the server transaction to the server transaction; and
committing each participant in the client transaction to the client transaction.

3. The method for performing an object-oriented client transaction as recited in Claim 1, further comprising the steps of:
creating a client Coordinator object in the client computer memory for coordinating at least one participating object in the client transaction;
creating a Transaction Context data structure containing a reference to the client Coordinator object and a request for a first participating object to notify the client Coordinator object of participation in the client transaction upon replying to the invocation request; and
transporting the Transaction Context data structure along with the invocation request to the server computer memory; and
creating a subordinate Coordinator object in the server computer memory for coordinating at least one participating object in the server transaction.

4. The method for performing an object-oriented client transaction, as recited in Claim 3, wherein the step of notifying the server application that the recoverable object includes data subject to change within the server transaction further comprises the steps of:
creating a server Resource object for notifying the subordinate Coordinator object that the recoverable object includes data that is subject to change within the server transaction; and
registering the server Resource object with the subordinate Coordinator object.

5. The method for performing an object-oriented client transaction, as recited in Claim 4, wherein the step of creating a client notification that the server application includes data subject to change within the client transaction further comprises the steps of:
creating a server transaction manger Resource object for notifying the client Coordinator object that the server application includes data subject to change within the client transaction; and
modifying the Transaction Context data structure to contain a reference to the server Coordinator object and a reference to the server transaction manager Resource object.

6. The method for performing an object-oriented client transaction, as recited in Claim 5, wherein the step of transporting the reply and the client notification to the client computer memory further comprises the step of:
transporting the reply and the Transaction Context data structure to the client computer memory.

7. The method for performing an object-oriented client transaction, as recited in Claim 6, wherein, if the client application requests a second invocation of a method on a second recoverable object in a second server computer memory, the method further comprises the steps of:
modifying the Transaction Context to include a reference to the subordinate Coordinator object; and
transporting the second invocation request and the modified Transaction Context to the second server computer memory.

8. The method for performing an object-oriented client transaction, as recited in Claim 7, further comprising the steps of:
preparing the server Resource object to determine whether the Resource object should commit to the server transaction;
committing the server Resource object to the server transaction;
committing the server transaction manager Resource object to the client transaction.

9. A method for performing an object-oriented client transaction involving a client computer having a client application and a client transaction manager stored in a client computer memory, an object request broker, and a first server computer having a server application and a server transaction stored in a server computer memory, the method comprising the steps of:
beginning the client transaction in the client application;
creating a client Coordinator object in the client computer memory for coordinating at least one participating object in the client transaction;
requesting an invocation of a method on a recoverable object from the client application;
creating a Transaction Context data structure containing a reference to the client Coordinator object and a request for a first participating object to notify the client Coordinator object of participation in the client transaction upon replying to the invocation request;
transporting the invocation request and the Transaction Context data structure to the server computer memory;
beginning a server transaction;
creating a subordinate Coordinator object in the server computer memory for coordinating at least one participating object in the server transaction:
creating a server transaction manager Resource object in the server computer memory for notifying the client Coordinator object that the server application includes data subject to change within the client transaction;
invoking the method on the recoverable object in the server application;
creating a server Resource object for notifying the subordinate Coordinator object that the recoverable object includes data subject to change within the transaction;
registering the server Resource object with the subordinate Coordinator object;
replying to the request from the client application;
modifying the Transaction Context data structure to contain a reference to the subordinate Coordinator object and a reference to the server transaction manager Resource object;
transporting the reply and the modified Transaction Context to the client computer memory; and
registering the server transaction manager Resource object with the client Coordinator object.

10. The method for performing an object-oriented client transaction, as recited in Claim 9, wherein, if the client application requests a second invocation of a method on a second recoverable object in a second server computer memory, the method further comprises the steps of:
modifying the Transaction Context to include a reference to the subordinate Coordinator object; and
transporting the second invocation request and the modified Transaction Context to the second server computer memory.

11. A system for performing a client transaction including a client computer having a client application and a client transaction manager stored in a client computer memory, an object request broker, and a first server computer having a server application and a server. transaction stored in a server computer memory, the system comprising:
means for beginning the client transaction in the client application;
means for requesting an invocation of a method on a recoverable object from the client application;
means for transporting the invocation request to the server computer memory;
means for beginning a server transaction in the server application;
means for invoking the method on the recoverable object in the server application;
means for notifying the server application that the recoverable object includes data subject to change within the server transaction;
means for creating a client notification that the server application includes data subject to change within the client transaction;
means for replying to the request from the client application; and
means for transporting the reply and the client notification to the client computer memory.

12. The system for performing a client transaction, as recited in Claim 11, further comprising:
means for preparing each participant in the server transaction for a committment to the server transaction;
means for committing each participant in the server transaction to the server transaction; and
means for committing each participant in the client transaction to the client transaction.

13. The system for performing a client transaction, as recited in Claim 12, further comprising:
means for creating a client Coordinator object in the client computer memory for coordinating at least one participating object in the client transaction;
means for creating a Transaction Context data structure containing a reference to the client Coordinator object and a request for a first participating object to notify the client Coordinator object of participation in the client transaction upon replying to the invocation request; and
means for transporting the Transaction Context data structure along with the invocation request to the server computer memory; and
means for creating a subordinate Coordinator object in the server computer memory for coordinating at least one participating object in the server transaction.

14. The system for performing a client transaction, as recited in Claim 13, wherein the means for notifying the server application that the recoverable object includes data subject to change within the server transaction further comprises:
means for creating a server Resource object for notifying the subordinate Coordinator object that the recoverable object includes data that is subject to change within the server transaction; and
means for registering the server Resource object with the subordinate Coordinator object.

15. The system for performing a client transaction, as recited in Claim 14, wherein the means for creating a client notification that the server application includes data subject to change within the client transaction further comprises:
means for creating a server transaction manger Resource object for notifying the client Coordinator object that the server application includes data subject to change within the client transaction; and
means for modifying the Transaction Context data structure to contain a reference to the server Coordinator object and a reference to the server transaction manager Resource object.

16. A machine readable media embodying instructions for causing the machine to perform a method of performing an object-oriented client transaction involving a client computer having a client application and a client transaction manager stored in a client computer memory, an object request broker, and a first server computer having a server application and a server transaction stored in a server computer memory, the method comprising the steps of:
beginning the client transaction in the client application;
requesting an invocation of a method on a recoverable object from the client application;
transporting the invocation request to the server computer memory;
beginning a server transaction in the server application;
invoking the method on the recoverable object in the server application;
notifying the server application that the recoverable object includes data subject to change within the server transaction;
creating a client notification that the server application includes data subject to change within the client transaction;
replying to the request from the client application; and
transporting the reply and the client notification to the client computer memory.
